Europäisches Patentamt

European Patent Office

Office européen des brevets

(19)

(11) Veröffentlichungsnummer: **0 162 450**

**A2**

(12) # EUROPÄISCHE PATENTANMELDUNG

(21) Anmeldenummer: **85106236.4**

(22) Anmeldetag: **21.05.85**

(51) Int. Cl.⁴: **B 65 F 1/14**

(30) Priorität: **21.05.84 DE 3418830**

(43) Veröffentlichungstag der Anmeldung:
**27.11.85 Patentblatt 85/48**

(84) Benannte Vertragsstaaten:
**AT BE CH DE FR GB IT LI LU NL SE**

(71) Anmelder: **Vogel, Josef E.**
**Am Irschberg 8**
**D-6697 Nohfelden 13(DE)**

(72) Erfinder: **Vogel, Josef E.**
**Am Irschberg 8**
**D-6697 Nohfelden 13(DE)**

(74) Vertreter: **Dipl.-Phys.Dr. Manitz Dipl.-Ing., Dipl.-Wirtsch.**
**Finsterwald Dipl.-Chem.Dr. Heyn Dipl.-Phys. Rotermund**
**Morgan, B.Sc.(Phys)**
**Robert-Koch-Strasse 1**
**D-8000 München 22(DE)**

(54) **Altbatterie-Sammelbehälter.**

(57) Ein Altbatterie-Sammelbehälter weist oben eine Einwurföffnung (12) auf, durch welche Altbatterien in einen Sammelkasten (11) geworfen werden können. Unterhalb der Einwurföffnung (12) befindet sich eine Rutsche (14), die eine Vielzahl von nur Knopfzellen, nicht jedoch Stab- und Flachbatterien durchlassenden Öffnungen (15) aufweist. Unter diesen Öffnungen (15) ist innerhalb des Sammelkastens (11) ein kleinerer Knopfzellen-Aufnahmekasten (16) vorgesehen. Auf diese Weisen werden Knopfzellen in dem Knopfzellen-Aufnahmekasten (16) und die übrigen größeren Batterien in dem Sammelkasten (11) gesammelt.

FIG.1

EP 0 162 450 A2

Altbatterie-Sammelbehälter

Die Erfindung betrifft einen Altbatterie-Sammelbehälter
mit oben durch einen eine Einwurföffnung aufweisenden
Deckel abgeschlossenen Sammelkasten.

Es wird heutzutage immer mehr üblich, für Sondermüll wie
Papier, Glas oder Altbatterien besondere Sammelbehälter
zur Verfügung zu stellen, um auf diese Weise eine Vorsortierung des Müll vorzunehmen und so eine umweltschonende, an die einzelnen Müllarten speziell angepaßte Müllverwertung zu gestatten.

Aber auch bei einer bestimmten Sondermüllart besteht noch
ein Bedarf, eine Unterteilung vorzunehmen. So ist es z.B.
bekannt, Altglas-Sammelbehälter in drei Abteile für verschiedenfarbiges Glas zu unterteilen. Der Nachteil derartiger Behälter besteht aber darin, daß die Sortierung
von der Aufmerksamkeit und Sorgfalt der Benutzer abhängt.
So kommt es/wieder vor, daß die Sortierung von den Benutzern nicht sachgerecht vorgenommen wird.

Das Ziel der Erfindung besteht darin, einen Altbatterie-
Sammelbehälter zu schaffen, durch die das besonders umweltgefährliche Quecksilber enthaltenden Knopfzellen von den
übrigen Batterien, insbesondere Flachbatterien und Stabbatterien einwandfrei und automatisch getrennt werden können.

Zur Lösung dieser Aufgabe sieht die Erfindung vor, daß
unterhalb der Einwurföffnung, die einen zur Aufnahme von
Stabbatterien, Flachbatterien und Knopfzellen ausreichenden Querschnitt aufweist, eine Rutsche angeordnet ist, die
eine Vielzahl von nur Knopfzellen, nicht jedoch Stab- und
Flachbatterien durchlassenden Öffnungen aufweist, unter
denen ein kleinerer Knopfzellen-Aufnahmekasten vorgesehen
ist, und welche in den Sammelkasten mündet.

Auf diese Weise werden die quecksilber- und silberhaltigen
Knopfzellen und Kleinbatterien einerseits und die größeren
Stab-, Quader- und Flachbatterien andererseits automatisch
getrennt, ohne daß es auf die Aufmerksamkeit und Sorgfalt
der Benutzer ankommt. Vielmehr können sämtliche Altbatterien
in ein und dieselbe Einwurföffnung eingeworfen werden, worauf
dann der Sortiervorgang automatisch erfolgt.

Die beiden Batteriegruppen werden also nach erfolgter Sortierung in zwei den anfallenden Mengen entsprechend dimensionierten Behältern gesammelt. Dabei ist der kleinere, herausnehmbare Behälter für quecksilber- und silberhaltige Knopfzellen bestimmt. Der große restliche Sammelkasten dient der
Aufnahme der übrigen handelsüblichen Batterien.

Um zu verhindern, daß bei defekten Quecksilberzellen Quecksilberdämpfe in die Umwelt abgegeben werden, können in den
Deckel oder die Wände spezielle quecksilberdampfabsorbierende,
leicht auswechselbare Spezialfilter eingebaut werden. Der
erfindungsgemäße Altbatterie-Sammelbehälter eignet sich
aufgrund seiner speziellen technischen und umweltsicheren
Konstruktion zum gefahrlosen Aufstellen und Sammeln der
schadstoffhaltigen Altbatterien im Freien und in geschlossenen Räumen.

Eine bevorzugte Ausführungsform ist so ausgebildet, daß die
Einwurföffnung nahe dem vorderen Rand angeordnet ist und die
Rutsche sich von dort bis in den hinteren Bereich des Sammelkastens erstreckt. Auf diese Weise kann die Rutsche eine relativ große Länge haben, so daß alle Knopfzellen auf jeden
Fall aussortiert werden. Die Öffnungen sollen teilweise

nebeneinander, teilweise hintereinander in der Rutsche angeordnet sein, derart, daß gewährleistet ist, daß auf jeden Fall alle am Beginn der Rutsche vorhandenen Knopfzellen bis zum Ende der Rutsche durch irgendeine der Öffnungen hindurchgefallen sind.

Besonders wichtig für eine einwandfreie Aussortierung der Knopfzellen ist der Winkel, den die Rutsche mit der Horizontalen einschließt. Erfindungsgemäß soll die Rutsche mit der Horizontalen einen Winkel $\alpha$ von 15 bis 30, vorzugsweise 18 bis 26 und insbesondere etwa 22$^{\circ}$ einschließen.

Um die Gefahr zu vermeiden, daß die von den Flachbatterien wegstehenden Metallelektroden sich eventuell in den Öffnungen der Rutsche verfangen, sieht eine besonders bevorzugte Ausführungsform vor, daß unterhalb der Einwurföffnung am Beginn der Rutsche noch vor dem Knopfzellen-Aufnahmekasten eine nach unten schwenkbare, durch die Kraft einer Feder geschlossen gehaltene Klappe vorgesehen ist, welche eine zum Durchlassen von Flach- und größeren Stabbatterien ausreichende Öffnung verschließt, wobei die Kraft der Feder so bemessen ist, daß die Klappe durch das Gewicht einer Flach- oder größeren Stabbatterie nach unten schwenken kann, beim Auftreffen von Knopfzellen und kleineren Stabbatterien jedoch geschlossen bleibt.

Auf diese Weise werden also die schwereren Batterien, noch bevor sie auf die Rutsche gelangen können, aussortiert. Die durch die Klappe fallenden Batterien werden im allgemeinen in dem gleichen Sammelkasten wie die über die Rutsche gelangten Stabbatterien gesammelt. Grundsätzlich könnte jedoch hier eine weitere Sortierung in zwei getrennten Abteilen erfolgen.

Bei der vorstehend beschriebenen Ausführungsform ist die Trennung von größeren Batterien und Knopfzellen besonders sicher, weil durch das Vorhandensein der durch eine Feder geschlossen gehaltenen Klappe ein doppelter Sortiereffekt erzielt wird.

Um ein einwandfreies Öffnen der Klappe zu gewährleisten, ist eine Weiterbildung der Erfindung so ausgebildet, daß das Gelenk der Klappe senkrecht zur Längsrichtung der Rutsche und horizontal verläuft sowie auf der von der Rutsche abgewandten Seite angeordnet ist. Hierbei soll die Klappe sich auf der von der Rutsche abgewandten Seite deutlich über die Einwurföffnung hinaus erstrecken. Auf diese Weise wird ein besonders günstiges Öffnungsmoment erzielt. Die schwereren Batterien treffen so nämlich in einen bestimmten Abstand vom Gelenk auf, was die Erzeugung eines größeren Drehmomentes gewährleistet.

Zur einwandfreien seitlichen Führung der Batterien kann weiter vorgesehen sein, daß die Rutsche seitlich durch vertikale Führungswände begrenzt ist.

Hierbei ist es besonders zweckmäßig, wenn die Führungswände sich oben bis zum Deckel erstrecken und dort befestigt sind.

Um auch im Bereich der Klappe eine einwandfreie Führung zu gewährleisten, kennzeichnet sich eine weitere Ausführungsform dadurch, daß die Führungswände sich bis zum Anfang der Rutsche bzw. dem Gelenk erstrecken, wo sie durch eine vertikale Querwand verbunden sind.

Der Sortiereffekt kann weiter dadurch verbessert werden, daß auf der den Öffnungen zugewandten Seite der Einwurföffnung eine vertikale Querwand sich vom Deckel bis zu einem solchen Abstand von der Rutsche nach unten erstreckt, daß zwischen der Unterkante der Querwand und der Rutsche ein Knopfzellen und kleinere Stabbatterien durchlassender Spalt verbleibt.

Um ein Auftreffen der schwereren Batterien zu nahe am Gelenk mit Sicherheit zu vermeiden, ist nach einer weiteren Ausführungsform auf der von den Öffnungen abgewandten Seite der Einwurföffnung eine kurze vertikale Querwand vorgesehen. Diese Querwand braucht sich nicht sehr weit in Richtung der Klappe zu erstrecken, da sie lediglich ein senkrechtes Herunterfallen eingeworfener Batterien gewährleisten soll.

Im allgemeinen soll der wesentlich kleiner als der Sammelkasten ausgebildete Knopfzellen-Aufnahmekasten sich nicht am Boden des Sammelkastens, sondern im deutlichen Abstand von ihm befinden, da auf diese Weise die aussortierten Knopfzellen nicht zu tief fallen müssen, wodurch sie beschädigt werden könnten, und damit der untere Teil des Sammelkastens für die Aufnahme der Stab- und Flachbatterien zur Verfügung steht. Die Erfindung sieht also zweckmäßigerweise weiter vor, daß der Knopfzellen-Aufnahmekasten im Abstand vom Boden des Sammelkastens an sich zu den Wänden des Sammelkastens erstreckenden Trägern angebracht ist.

Vorzugsweise ist der Knopfzellen-Aufnahmekasten entsprechend der Form der Rutsche als länglicher, oben schräg abgeschnittener Quader geformt. Hierdurch wird gewährleistet, daß der Knopfzellen-Aufnahmekasten unmittelbar an die Unterseite der Rutsche angrenzt, so daß ein zufälliges seitliches Herausfallen von aussortierten Knopfzellen sicher vermieden wird.

Um ein unbefugtes Öffnen des Behälters zu vermeiden, ist der abnehmbare Deckel am Sammelkasten vorzugsweise verriegelbar. Zum Abnehmen soll er oben einen Griff aufweisen.

Um insbesondere das Eintreten von Feuchtigkeit und Regen in das Innere des Behälters zu vermeiden, soll nach einer weiteren Ausführungsform oberhalb des die Einwurföffnung aufweisenden Deckels ein Schutzklappdeckel am Sammelkasten angebracht sein.

Die Erfindung wird im folgenden beispielsweise anhand der Zeichnung beschrieben; in dieser zeigt:

Fig. 1    eine teilweise geschnittene Seitenansicht eines erfindungsgemäßen Altbatterie-Sammelbehälters,

Fig. 2    eine teilweise geschnittene Vorderansicht,

Fig. 3    eine teilweise geschnittene Draufsicht,

Fig. 4    eine teilweise geschnittene Seitenansicht analog Fig. 1 in vergrößertem Maßstab ohne den Schutzklappdeckel nach Linie IV-IV in Fig. 6,

Fig. 5    eine teilweise geschnittene Vorderansicht des Gegenstandes der Fig. 4 in Richtung des Pfeiles V in Fig. 4,

Fig. 6    eine teilweise geschnittene Draufsicht des Gegenstandes der Fig. 4, und

Fig. 7    eine Draufsicht der Rutsche des Altbatterie-Sammelbehälters nach den Fig. 4 bis 6.

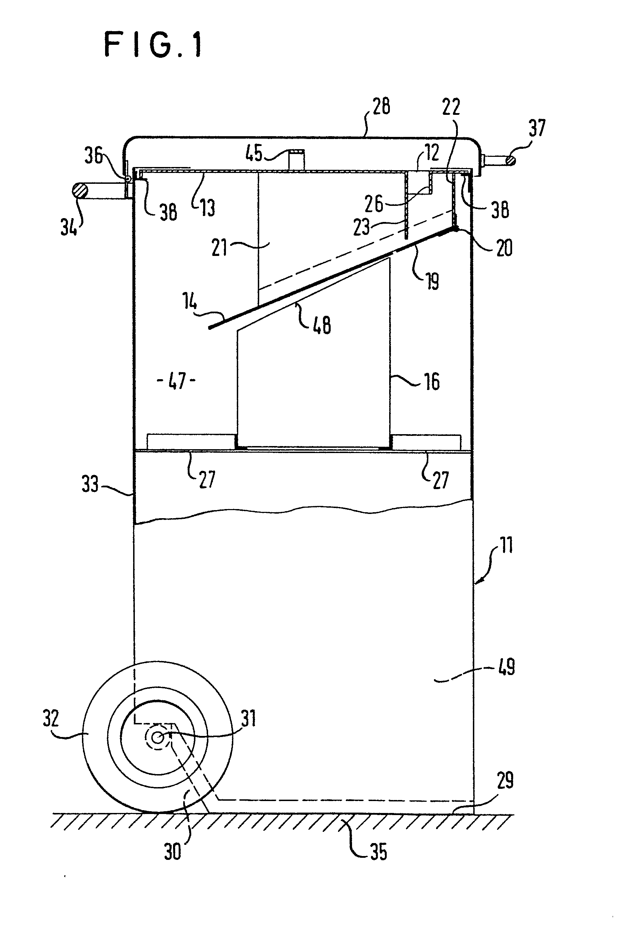

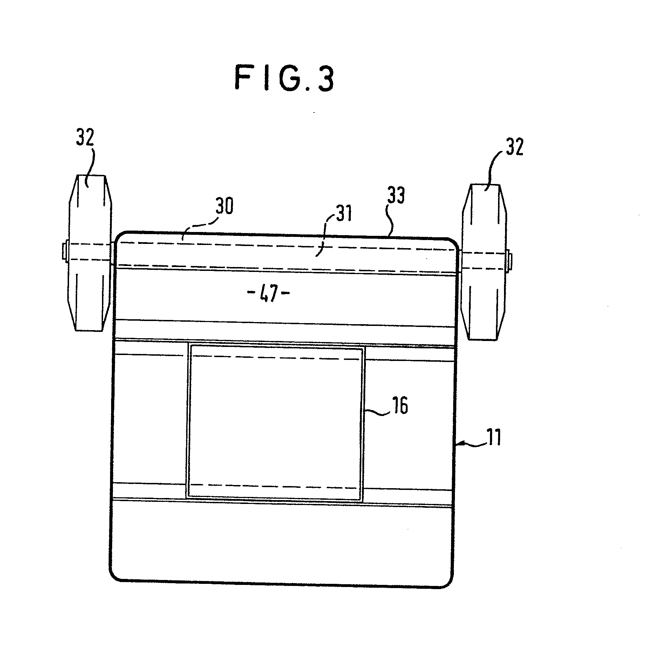

Nach den Fig. 1 bis 3 besteht der erfindungsgemäße Altbatterie-Sammelbehälter aus einem einen annähernd quadratischen Querschnitt aufweisenden quaderförmigen Sammelkasten 11, der mit seiner Unterseite 29 auf dem Boden steht und im hinteren Bereich unten eine Ausnehmung 30 (Fig.1) aufweist, an deren oberem Ende eine Querachse 31 am Sammelkasten 11 befestigt ist, welche seitlich über den Sammelkasten 11 hinaus vorsteht und dort Laufräder 32 trägt, die bei der in den Fig. 1 bis 3 wiedergegebenen Ruhestellung ebenso wie der Boden 29 auf der Unterlage 35 aufliegen.

An der hinteren Wand 33 des Sammelkastens 11 ist ganz oben ein Griff 34 angebracht, an dem eine Bedienungsperson angreifen kann, um den Sammelkasten 11 um die Achse der Räder
32 nach hinten zu kippen und so den Altbatterie-Sammelbehälter verfahren zu können.

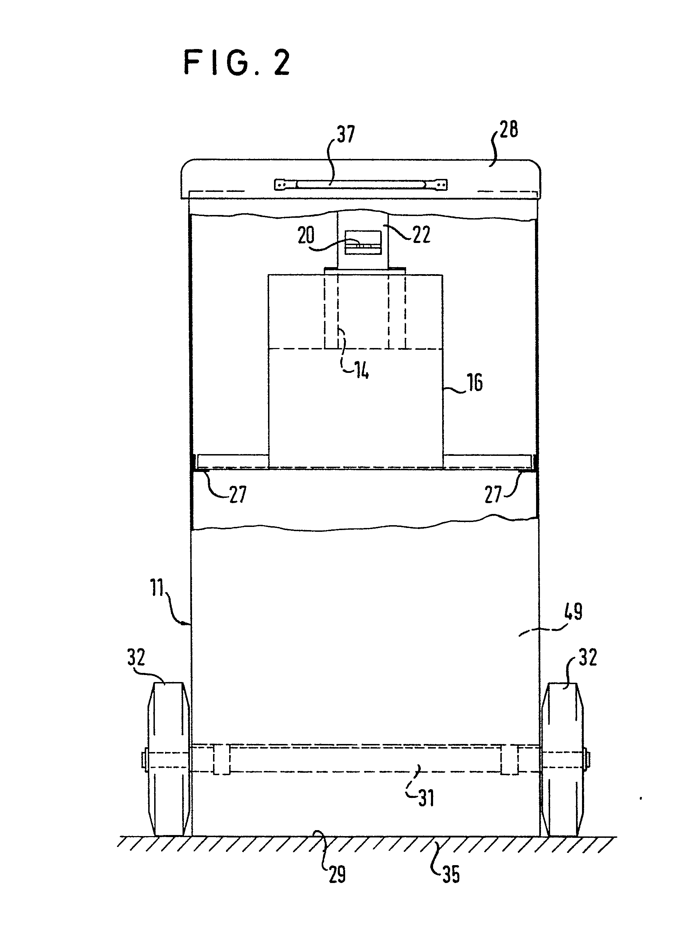

Oben ist der Sammelkasten 11 durch einen Schutzklappdeckel
28 abgeschlossen, welcher durch zwei an der Rückseite des
Sammelkastens 11 oben vorgesehene Scharniere 36 aufklappbar
ist. Nach Fig. 1 und 2 übergreift der Schutzklappdeckel 28
den Sammelkasten allseitig mit seinem Rand, so daß das Innere
des Sammelkastens gegen das Eindringen von Feuchtigkeit, insbesondere Regen geschützt ist.

An der von den Scharnieren 36 abgewandten Seite weist der
Deckel einen Handgriff 37 auf, an dem er zum Öffnen ergriffen werden kann.

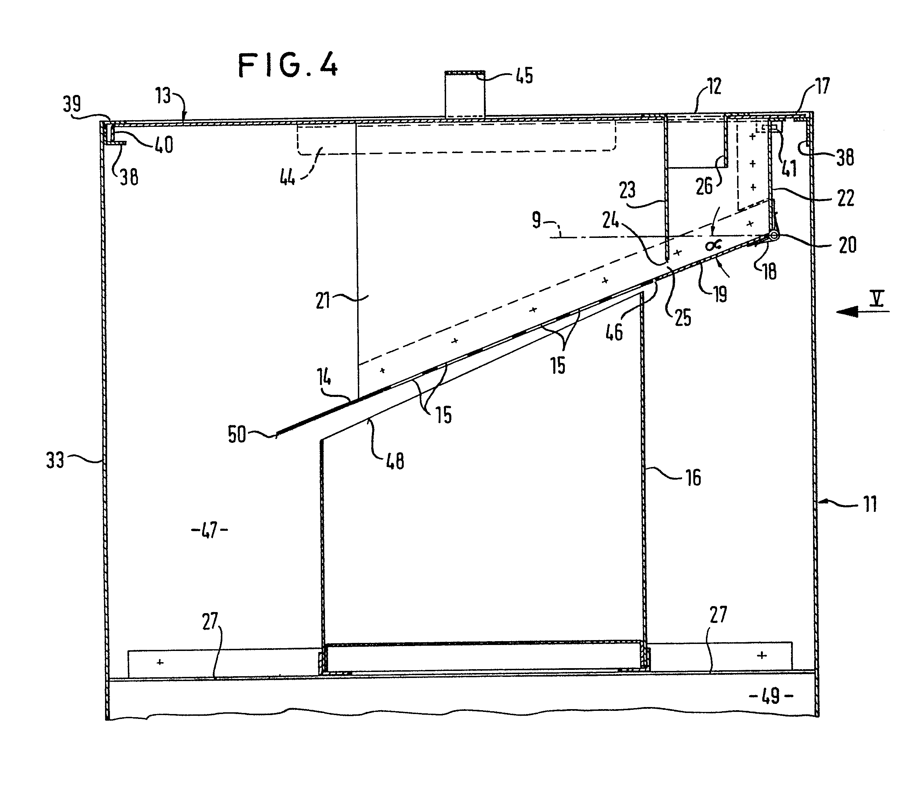

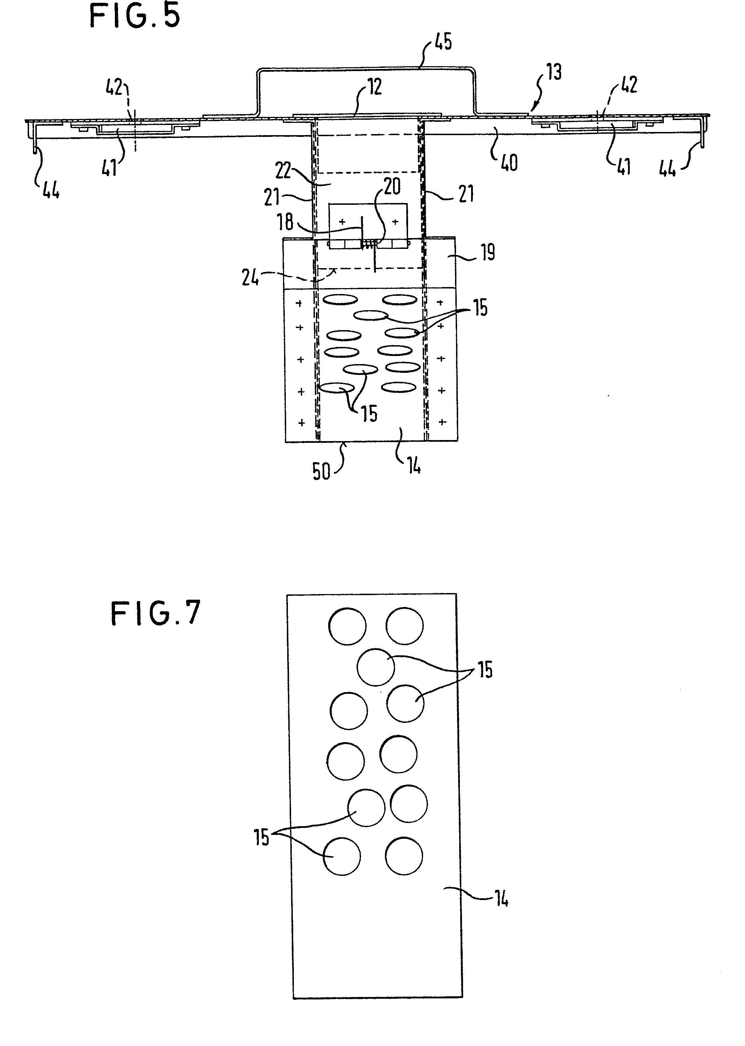

Wie insbesondere auch aus den Fig. 4 bis 7 hervorgeht, befindet sich unterhalb des Schutzklappdeckels auf dem Sammelkasten 11 ein weiterer Deckel 13, der jedoch im wesentlichen
flach ausgebildet ist und den Kasten außen nicht übergreift.
Er liegt vielmehr auf am oberen Rand des Sammelkastens 11 innen
vorgesehenen Winkellagern 38 auf.

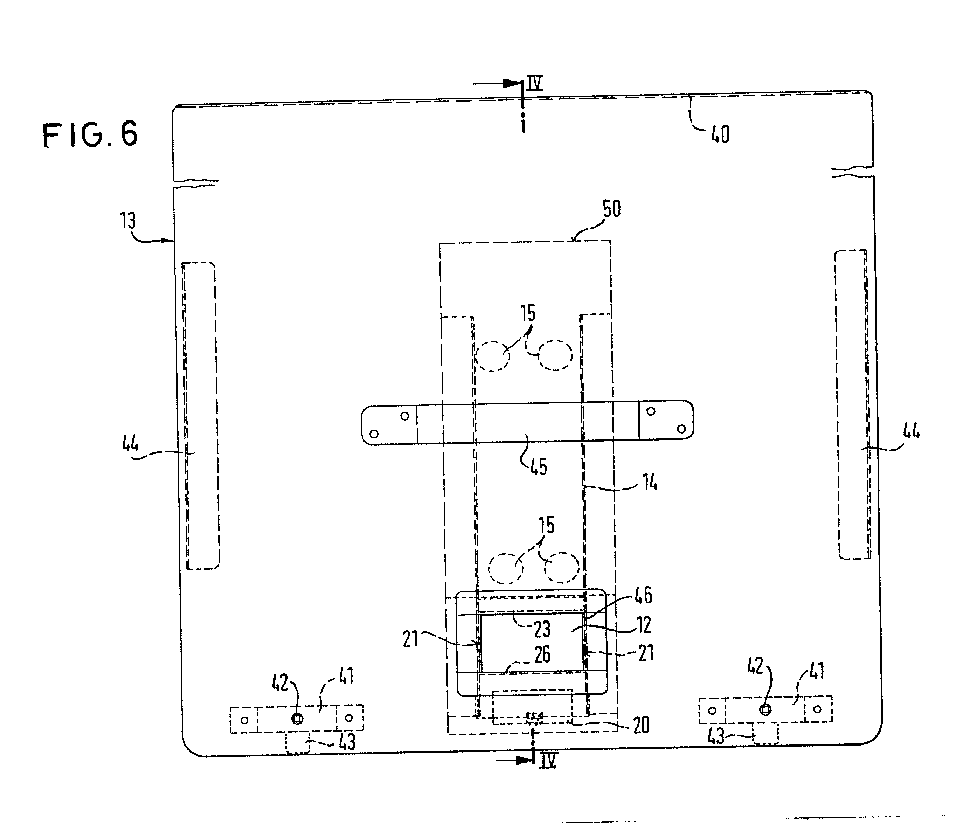

Im vertikalen Abstand von dem hinteren Winkellager 38 ist
ein Blechstreifen 39 vorgesehen, zwischen dem und dem Winkellager 38 eine hintere Abwinklung 40 des Deckels 13 eingesetzt ist. Am vorderen Rand sind seitlich Schlösser 41 angeordnet, die über jeweils einen Vierkant 42 von außen betätigbar sind und einen Riegel 43 aufweisen, der nach dem Aufsetzen des Deckels 13 in die in Fig. 6 angedeutete gestrichelte Lage geschwenkt werden kann, wobei er unter das vordere
Winkellager 38 (Fig. 4) gelangt und so in Zusammenwirkung mit
dem Blechstreifen 39 ein unbefugtes Herausnehmen des Deckels
verhindert.

Seitlich sind innen am Deckel 13 nach unten vorstehende Führungswinkel 44 angeordnet, die sich nach dem Aufsetzen auf in der Zeichnung nicht dargestellte horizontale Auflager an den Innenseiten der Seitenwände des Sammelkastens 11 auflegen.

Oben auf dem Deckel 13 ist etwa in der Mitte ein nicht ganz bis zum Schutzklappdeckel 28 reichender Handgriff 45 angeordnet, mittels dessen der Deckel 13 einschließlich der an ihm angeordneten Aggregate nach oben herausgenommen werden kann.

In seinem vorderen Bereich weist der Deckel 13 eine rechteckförmige Einwurföffnung 12 auf, an die sich nach unten ein Schacht anschließt, der durch Querwände 23, 26 und Seitenwände 21 gebildet wird. Die vordere Querwand 26 ist relativ kurz und endet in deutlichem Abstand von einer unter der Einwurföffnung 12 angeordneten Rutsche 14 bzw. Klappe 19.

Die hintere Querwand 23 erstreckt sich wesentlich weiter nach innen; ihre Unterkante 24 endet in einem solchen Abstand von der Rutsche 14, daß durch den verbleibenden Spalt 25 zwar Knopfzellen und kleinere Stabbatterien hindurchgelangen können, nicht jedoch Flachbatterien und größere Stabbatterien.

Die den oberen Teil der Rutsche 14 bildende Klappe 19 ist mit ihrem vorderen Ende über ein querverlaufendes Gelenk 20 an der Unterkante einer vorderen Querwand 22 befestigt, die mit deutlichem Abstand vor der den Einwurfschacht begrenzenden Querwand 26 angeordnet ist. Die Klappe 19 wird durch eine Schenkelfeder 18 in die in Fig. 4 gezeigte Schließlage gedrückt, in der sie eine am oberen Ende der Rutsche vorgesehene Öffnung 46 verschließt.

Nach Fig. 6 ist die Breite der rechteckigen Öffnung 46 gleich der Breite der sich nach unten anschließenden Rutsche 14, in der eine Vielzahl von kreisrunden Öffnungen 15 vorgesehen ist, deren Größe das Hindurchfallen von Knopfzellen, nicht aber von flachliegenden Stabbatterien oder quaderförmigen Batterien gestattet.

0162450

Der Winkel $\alpha$ , unter dem sich die längliche Rutsche 14 und die Klappe 19 im geschlossenen Zustand relativ zur Horizontalen 9 erstrecken, beträgt ca. 22° (Fig. 4).

Die Rutsche erstreckt sich nach Fig. 4 und 6 bis in den hinteren Bereich 47 des Innenraums des Sammelkastens 11. Ihre Hinterkante 50 endet jedoch in deutlichem Abstand von der hinteren Wand 33.

Nach den Fig. 1, 2 und 4 sind am Beginn der oberen Hälfte des Sammelkastens 11 Träger 27 zwischen den Seitenwänden des Sammelkastens 11 angeordnet, auf denen herausnehmbar, aber gegen seitliche Verschiebung gesichert ein Knopfzellen-Aufnahmekasten 16 angeordnet ist, dessen Querschnitt im wesentlichen der Projektion der darüber angeordneten Rutsche 14 entspricht.

Seitlich ist die Rutsche 14 durch Führungswände 21 begrenzt, die sich bis zur Unterseite des Deckels 13 erstrecken.

Der obere Rand 48 des Aufnahmekastens 16 verläuft unter einem Winkel von 25° zur Horizontalen, fällt also gemäß Fig. 4 etwas stärker ab als die Rutsche 14. Die Rutsche 14 reicht in Richtung der hinteren Wand 33 des Sammelkastens 11 ein Stück über den Knopfzellen-Aufnahmekasten 11 hinaus. Die Öffnungen 15 befinden sich ausschließlich im Bereich der oberen Öffnung des Knopfzellen-Aufnahmekastens 16.

Die Funktion des erfindungsgemäßen Altbatterie-Sammelbehälters ist wie folgt:

Zum Einwerfen von Altbatterien wird zunächst der Schutzklappdeckel 28 durch Ergreifen an dem im Bereich des vorderen Randes 17 vorgesehenen Handgriffes 37 hochgeklappt. Nunmehr liegt die Einwurföffnung 12 nach oben frei, und es können Altbatterien in beliebiger Reihenfolge in die Einwurföffnung 12 eingeworfen werden.

Flachbatterien und größere Stabbatterien fallen auf die untere Hälfte der Klappe 19 und schwenken diese gegen die Kraft der Schenkelfeder 18 aufgrund ihres Eigengewichtes
nach unten, so daß die Öffnung 46 freigegeben wird und
die betreffenden Batterien in das Innere des Sammelkastens
11 fallen können. Da die Öffnung 46 sich vor dem Beginn des
Knopfzellen-Aufnahmekastens 16 befindet, fallen die betreffenden Batterien an diesen Sammelkasten vorbei durch den
Raum zwischen den Trägern 27 in den unteren Teil 49 des
Sammelkastens 11.

Knopfzellen sind wegen ihres geringeren Gewichtes nicht in
der Lage, die Klappe 19 zu öffnen, so daß sie aufgrund der
Schrägstellung der Klappe 19 durch den Spalt 25 hindurch
auf die Rutsche 14 gelangen, wo sie schließlich in den Bereich mit den Öffnungen 15 eintreten. Sobald die Knopfzelle
mit einer der Öffnungen 15 mehr oder weniger ausgerichtet ist,
fällt sie durch diese hindurch in den darunter angeordneten
Knopfzellen-Aufnahmekasten 16.

Kleinere Stabbatterien gelangen ebenfalls durch den Spalt 25
hindurch, können jedoch wegen der nicht ausreichenden Größe
der Öffnungen 15 nicht durch diese hindurchfallen, sondern
rutschen oder rollen weiter über die Rutsche 14 hinab bis
zu deren Hinter- bzw. Unterkante 50, von der sie in das
Innere des Sammelkastens 11 hineinfallen. Am Boden des
Sammelkastens 11 sammeln sich demnach sämtliche Flach- und
stabförmigen Batterien sowie auch die quaderförmigen 9V-
Batterien.

Zum Entleeren des Abfall-Sammelbehälters wird zunächst der
Schutzklappdeckel 28 nach oben bzw. hinten geklappt, worauf
dann der Deckel 13 mit der daran unten angeordneten Sortiervorrichtung abgenommen wird, indem zunächst die Riegel 43 der
Schlösser 41 zur Seite geschwenkt werden und der Deckel 13
an dem Handgriff 45 nach oben herausgehoben wird.

Nunmehr ist das Innere des Sammelkastens 11 zugänglich, und
der Knopfzellen-Aufnahmekasten 16 kann ohne weiteres ergriffen und aus dem Inneren des Sammelkastens 11 herausgenommen werden. Die darin befindlichen Knopfzellen
können nunmehr einer geeigneten Verwertung zugeführt
werden.

Anschließend können dann die im unteren Teil oder auch
neben dem Knopfzellen-Aufnahmekasten 16 gesammelten Stab-
und Flachbatterien aus dem Sammelkasten ausgekippt und
ebenfalls in geeigneter Weise verwertet werden.

Der gesamte Altbatterie-Sammelbehälter soll aus säurefestem
Material gefertigt sein.

Der Knopfzellen-Aufnahmekasten 16 ist vorzugsweise deutlich breiter, insbesondere etwa doppelt so breit wie die
Rutsche 14, aber deutlich schmaler als der Sammelkasten 11
(Fig. 2).

---

Altbatterie-Sammelbehälter

---

Patentansprüche

1. Altbatterie-Sammelbehälter mit oben durch einen eine Einwurföffnung aufweisenden Deckel abgeschlossenen Sammelkasten, dadurch g e k e n n z e i c h n e t , daß unterhalb der Einwurföffnung (12), die einen zur Aufnahme von
Stabbatterien, Flachbatterien und Knopfzellen ausreichenden Querschnitt aufweist, eine Rutsche (14) angeordnet ist,
die eine Vielzahl von nur Knopfzellen, nicht jedoch Stab-
und Flachbatterien durchlassenden Öffnungen (15) aufweist,
unter denen ein kleinerer Knopfzellen-Aufnahmekasten (16)
vorgesehen ist, und welche in den Sammelkasten (11) mündet.

2. Behälter nach Anspruch 1, dadurch g e k e n n z e i c h - n e t , daß die Einwurföffnung nahe dem vorderen Rand (17) angeordnet ist und die Rutsche (14) sich von dort bis in den hinteren Bereich des Sammelkastens (11) erstreckt.

3. Behälter nach Anspruch 1 oder 2, dadurch g e k e n n - z e i c h n e t , daß die Rutsche (14) mit der Horizontalen einen Winkel ($\alpha$) von 18 bis 26, vorzugsweise 20 bis 24 und insbesondere etwa 22$^{\circ}$ einschließt.

4. Behälter nach einem der vorhergehenden Ansprüche, dadurch g e k e n n z e i c h n e t , daß unterhalb der Einwurf-öffnung (12) am Beginn der Rutsche (14) noch vor dem Knopfzellen-Aufnahmekasten (16) eine nach unten schwenkbare, durch die Kraft einer Feder (18) geschlossen gehaltene Klappe (19) vorgesehen ist, welche eine zum Durchlassen von Flach- und größeren Stabbatterien ausreichende Öffnung verschließt, wobei die Kraft der Feder so bemessen ist, daß die Klappe (19) durch das Gewicht einer Flach- oder größeren Stabbatterie nach unten schwenken kann, beim Auftreffen von Knopfzellen und kleineren Stabbatterien jedoch geschlossen bleibt.

5. Behälter nach Anspruch 4, dadurch g e k e n n z e i c h n e t, daß das Gelenk (20) der Klappe (19) senkrecht zur Längsrichtung der Rutsche (14) und horizontal verläuft sowie auf der von der Rutsche (14) abgewandten Seite angeordnet ist.

6. Behälter nach Anspruch 5, dadurch g e k e n n z e i c h n e t , daß die Klappe (19) sich auf der von der Rutsche (14) abgewandten Seite deutlich über die Einwurföffnung (12) hinaus erstreckt.

7. Behälter nach einem der vorhergehenden Ansprüche, dadurch g e k e n n z e i c h n e t , daß die Rutsche (14) seitlich durch vertikale Führungswände (21) begrenzt ist.

8. Behälter nach Anspruch 7, dadurch g e k e n n z e i c h - n e t , daß die Führungswände (21) sich oben bis zum Deckel (13) erstrecken und dort befestigt sind.

9. Behälter nach Anspruch 7 oder 8, dadurch g e k e n n - z e i c h n e t , daß die Führungswände (21)sich bis zum Anfang der Rutsche (14) bzw. dem Gelenk (20) erstrecken, wo sie durch eine vertikale Querwand (22) verbunden sind.

10. Behälter nach einem der vorhergehenden Ansprüche, dadurch g e k e n n z e i c h n e t , daß auf der den Öffnungen (25) zugewandten Seite der Einwurföffnung (12) eine vertikale Querwand (23) sich vom Deckel (13) bis zu einem solchen Abstand von der Rutsche (14) nach unten erstreckt, daß zwischen der Unterkante (24) der Querwand (23) und der Rutsche (14) ein Knopfzellen und kleinere Stabbatterien durchlassender Spalt (25) verbleibt.

11. Behälter nach einem der vorhergehenden Ansprüche, dadurch g e k e n n z e i c h n e t , daß auf der von den Öffnun- gen (15) abgewandten Seite der Einwurföffnung (12) eine kurze vertikale Querwand (26) vorgesehen ist.

12. Behälter nach einem der vorhergehenden Ansprüche, dadurch g e k e n n z e i c h n e t , daß der Knopfzellen-Aufnahme- kasten (16) im Abstand vom Boden des Sammelkastens (11) an sich zu den Wänden des Sammelkastens (11) erstreckenden Trägern (27) angebracht ist.

13. Behälter nach einem der vorhergehenden Ansprüche, dadurch g e k e n n z e i c h n e t , daß der Knopfzellen-Aufnahme- kasten (16) entsprechend der Form der Rutsche (14) als länglicher, oben schräg abgeschnittener Quader geformt ist.

14. Behälter nach einem der vorhergehenden Ansprüche, dadurch g e k e n n z e i c h n e t , daß der abnehmbare Deckel (13) am Sammelkasten (11) verriegelbar ist.

15. Behälter nach einem der vorhergehenden Ansprüche, dadurch g e k e n n z e i c h n e t , daß der Knopfzellen-Aufnahmekasten (16) aus dem Sammelkasten (11) herausnehmbar angeordnet ist.

16. Behälter nach einem der vorhergehenden Ansprüche, dadurch g e k e n n z e i c h n e t , daß oberhalb des die Einwurföffnung (12) aufweisenden Deckels (13) ein Schutzklappdeckel (28) am Sammelkasten (11) angebracht ist.

0162450

# FIG.1

# FIG. 2

# FIG.3

# FIG.4

0162450

FIG.5

FIG.7

FIG.6